# EUROPEAN PATENT APPLICATION

(11) **EP 0 721 740 A1**
(43) Date of publication of application: **17.07.1996**
(21) Application number: 96100285.4
(22) Date of filing: 10.01.1996
(51) Int. Cl.: A23F 5/26, A23F 5/40

(54) **Process for producing coffee extract**

(30) Priority: 12.01.1995 JP 18848/95
(71) Applicant: Hagiwara, Yoshihide, Takarazuka-shi Hyogo-ken (JP)
(72) Inventor: Hagiwara, Yoshihide, Takarazuka-shi Hyogo-ken (JP)
(74) Representative: Kraus, Walter, Dr.

(57) **Abstract**

This invention provides a process for producing a coffee extract which comprises adding 2 to 20 weight parts of an aqueous alcohol solution having a concentration of 10 to 95 weight % to 1 weight part of roasted coffee beans or ground roasted coffee beans, or powder of extract thereof with hot water, subjecting the mixture to extraction treatment at temperatures of 95°C or less, and drying the extract. The coffee extract obtained by this process is useful for producing a coffee drink which is excellent in drink aptitude and has less side effects on the stomach and intestines, and moreover does not cause precipitation nor turbidity.

## Description

This invention relates to a process for producing a coffee extract fit to produce coffee drinks excellent in drink aptitude and less stimulative to the stomach and intestines, etc.

Coffee drinks are produced using as a raw material extract by percolation or extract with hot water of roasted coffee beans or ground roasted coffee beans, and as to the production various methods have hitherto been proposed for maintenance of the perfume components, prevention of turbidity, etc.

For example, Japanese Laid-open Patent Publication No. 62739/1994 discloses that sustainability of the smell is enhanced by mixing and stirring roasted ground coffee beans and milk water of 30°C or less and extracting coffee liquid, and Japanese Patent Publication No. 75470/1994 discloses a method for preventing a coffee extract from deteriorating, which comprises adding rutin, a rosemary extract or a sage extract to the coffee extract, or extracting roasted coffee beans with hot water to which 2 weight % aqueous sodium citrate solution or a solution of 10 % rutin in glycerol was added so as to make the concentration 0.5 %.

Further, Japanese Laid-open Patent Publication No. 62740/1994 discloses that a coffee drink free of turbidity is produced by either adding 0.2 weight part or more in terms of hydroxyl group of ethyl alcohol, hexyl alcohol or the like based on 100 weight parts of the soluble solid components of a coffee extract to hot water used for extraction, or adding it to an extract of coffee beans with hot water, and Japanese Laid-open Patent Publication No. 245703/1994 discloses a process for producing a stable coffee drink free of precipitation of milk proteins and separation of fats, which comprises adding an emulsifier and microcrystalline cellulose to a coffee extract to which raw cream or butter was added, making the pH of the mixture to 5.0 to 6.5, and sterilizing the mixture with heating. Further, Japanese Patent Publication No. 61218/1994 discloses a method for decaffeining raw coffee beans mildly.

Although, as mentioned above, various proposals have hitherto been made on techniques such as maintenance of the smell of coffee drinks and prevention of turbidity or deterioration of quality, sufficient improvement has not yet been made for making them easy to drink, nor on stimulation on the stomach and intestines, etc.

The main object of this invention is to provide a process for producing a coffee extract fit for producing coffee drinks, which are excellent in drink aptitude, have less stimulation or side effects on the stomach and intestines, etc. due to proteins, polysaccharides, tannin, etc., and do not cause undesirable actions such as anorexia and upset stomach, etc., by removing stimulating substances which coffee inherently possesses, from roasted coffee beans or ground roasted coffee beans, or powder of extract thereof with hot water.

The above object of this invention can be accomplished, according to this invention, by a process for producing a coffee extract which comprises adding 2 to 20 weight parts of an aqueous alcohol solution having a concentration of 10 to 95 weight % to 1 weight part of roasted coffee beans or ground roasted coffee beans, or powder of extract thereof with hot water, subjecting the mixture to extraction treatment at temperatures of 95°C or less, and drying the extract.

Further detailed description is made below on the process for producing a coffee extract and coffee drinks using the extract as a raw material.

There is no particular limitation on the kind of coffee beans to be used as a raw material in the process of this invention, and coffee beans from various coffee tree-growing districts such as Brazil, Colombia, Kilimanjaro, Guatemala and etc. can be used. These coffee beans can be roasted according to a usual method, and then subjected, as such, to the extraction treatment according to this invention, but, if desired, the roasted coffee beans can be subjected to the extraction treatment after they were ground using apparatuses such as roll crushers, roll mills, disintegraters, screw mills or disc mills.

Further, the extraction treatment according to this invention can also be made on dry powder of an extract obtained, as mentioned above, by extracting roasted coffee beans or ground roasted coffee beans with hot water. As examples of such hot water extraction, there can be mentioned a method which comprises suspending ground roasted coffee beans in hot water, and allowing the suspension to stand or stirring it, a method which comprises subjecting ground roasted coffee beans to multistage extraction, etc., and the resultant extract can be powdered by drying according to spray drying, freeze drying or the like.

This invention is characterized in that the above-mentioned roasted coffee beans or ground roasted coffee beans, or powder of extract thereof with hot water (hereafter, these are generically referred to as "raw material coffee") is subjected to extraction treatment with an aqueous alcohol solution having a specific concentration, and, thereby, stimulating substances in the raw material coffee and substances causing turbidity when coffee drinks are produced can be removed effectively.

As alcohol solutions to be used in the process of this invention, an aqueous methanol solution and an aqueous ethanol solution, particularly an aqueous ethanol solution are preferred, and the alcohol concentration in the aqueous solution can be within the range of 10 to 95 weight %, preferably 30 to 90 weight %, more preferably 35 to 85 weight %. When the alcohol concentration is lower than 10 weight %, the rate that proteins, tannin, etc. mingle in the extract is increased, and precipitation or turbidity is liable to occur when coffee drinks were produced, and, further, stimulation on the stomach and intestines, etc. is strengthened. On the other hand, when it is higher than 95 weight %, the extraction efficiency of components involved with the color, smell, taste, etc. of coffee drinks is lowered, and there arises a possibility that the product is unfit as a raw material for coffee drinks.

The use amount of the aqueous alcohol solution can be varied depending on the alcohol concentration, etc., but, generally, can be within the range of 2 to 20 weight parts, preferably 5 to 15 weight parts, more preferably 7.5 to 12.5 weight parts based on 1 weight parts of raw material coffee.

The extraction treatment of the raw material coffee can be conducted by adding to raw material coffee an aqueous alcohol solution of the above concentration at the above amount, and allowing the mixture to stand or stirring it at temperatures of 95°C or less, preferably at temperatures within the range of 0 to 70°C, more preferably 15 to 65°C. Time for the treatment can be varied depending on the form of the raw material coffee, the concentration of the aqueous alcohol solution, etc., but, usually, it is suitable that the time is 10 minutes or more, preferably on the order of 1 to 100 hours, more preferably on the order of 3 to 80 hours.

After the extraction, the raw material coffee is removed from the extract, for example by a means such as filtration or centrifugation, and the resultant extract is dried, if desired, after being concentrated.

Concentration of the extract can be conducted by a usual method such as, for example, distillation or evaporation under reduced pressure, and the resultant concentrate can be spray dried introducing hot air of the order of 110 to 250°C, preferably 120 to 200°C or freeze dried.

There can be added to the ext ract which was concentrated when desired, prior to drying, if desired, appropriate amounts of edible or drinkable excipients or extenders (e. g., dextrin, cyclodextri n, gums, mal tose, maltitol, lactose, sucrose fructose, etc.), nutrients (e.g., vitamins, extracts of various crude drugs, extracts of various vegetables, extracts of fruits, etc.), bitters (e.g., powders or extracts of hops, halsam pear (Momordica charantia), ginseng (Ginseng radix), Picrasmae lignum (Picrasmae ailanthoides Planclson), etc.) and/or spices (e.g., various perfumes such as yogurt perfumes, lemon perfumes, apple perfumes and strawberry perfumes; cinnamon, mint, ginger, etc.). Particularly, when the extract is spray dried or freeze dried together with a binding coating substance such as dextrin, cyclodextrin or a gum, there can be obtained a coffee extract solid powder wherein a coffee extract powder is coated or enmicrocapsulated with such a coating substance.

Thus, there can be obtained such a stable coffee extract solid powder that stimulating substances which coffee inherently possesses are completely removed therefrom, and it does not contain substances causing turbidity when drinks are produced therefrom.

The coffee extract obtained according to the process of this invention is easily soluble in water, and can be made into a coffee drink by dissolving it, for example in hot water. The coffee drink is less stimulating on the stomach and intestines, etc., does not give strong stimulation which coffee inherently possesses, and very easy to drink.

Although as to characteristics of a coffee drink its caffeine content is an important factor, loss of caffeine is small in the case of the extraction process of this invention, and coffee extract powder obtained by the process of this invention possesses a caffeine content almost equal to that of commercial instant coffee powders. For example, the caffeine content of the coffee extract powder obtained in the later-described Example 6 is about 3.4 %, and is almost equal to the caffeine content (3.7 %) of a commercial instant coffee.

It is possible to add, when desired, caramel dye, soluble bitters, for example powders or extracts of hops, balsam pear, ginseng, Picrasmae lignum, etc. to the above coffee drinks produced using the coffee extract of this invention, and thereby, the resultant coffee drinks can have their characteristics, respectively.

Extract of the above hop, balsam pear, ginseng, Picrasmae lignum, or the like can, for example, be obtained by cutting such a raw material thin, or drying and grinding it, and extracting bitter components and perfume components with water, warm water or the like. More specifically, extract of bitter components can be obtained by adding 0.2 to 2 L of water or an aqueous alcohol solution to 100 g of a thin cut product or dried and ground product of hop, balsam pear, ginseng, Picrasmae lignum, or the like, subjecting the mixture to extraction treatment under warming for about 10 minutes to about 5 hours, adding to the resultant extract and dissolving therein 1 to 10-fold amount in terms of solid component weight of an excipient or extender such as dextrin and drying the solution by spray drying and etc.

This invention is further specifically described below by examples.

### Example 1

1,000 g of 40 weight % aqueous ethanol solution was added to 100 g of roasted medium ground coffee beans, the mixture was stirred at room temperature for 1 hour, 6 hours or 24 hours, and after the lapse of the time the extraction treated liquids were filtered. Each of the resultant extracts was concentrated under reduced pressure until the weight thereof became about 200 g, and then spray dried at an inlet temperature of 140°C and an outlet temperature of 80°C . Thereby, 12.0 g, 15.2 g and 25.5 g of dry powders of coffee extracts were obtained, respectively.

### Example 2

The same treatment as in Example 1 was made except that the same amount of 60 weight % aqueous ethanol solution was used in place of the 40 weight % aqueous ethanol solution in Example 1, and thereby 10.7 g, 12.2 g and 17.3 g of dry powders of coffee extracts were obtained, respectively.

### Example 3

The same treatment as in Example 1 was made except that the same amount of 80 weight % aqueous ethanol solution was used in place of the 40 weight % aqueous ethanol solution in Example 1, and thereby 4.1 g, 5.9 g and 7.8 g of dry powders of coffee extracts were obtained, respectively.

### Example 4

The same treatment as in Example 1 was made except that the same amount of 80 weight % aqueous ethanol solution was used in place of the 40 weight % aqueous ethanol solution and the extraction temperature was changed to 50°C in Example 1, and thereby 5.7 g, 6.7 g and 7.5 g of coffee extract powders were obtained by extraction treatment of 1 hour, 3 hours and 6 hours, respectively.

### Example 5

The same treatment as in Example 1 was made except that the same amount of 70 weight % aqueous methanol solution was used in place of the 40 weight % aqueous ethanol solution in Example 1, and thereby 11.5 g, 14.5 g and 17.2 g of coffee extract powders were obtained by extraction treatment of 1 hour, 3 hours and 6 hours, respectively.

### Example 6

10 L of water was added to 1,000 g of roasted medium ground coffee beans, the mixture was heated at 95°C for 1 hour and filtered, the filtrate was concentrated under reduced pressure until its volume became about 2 L, and the concentrate was spray dried at an inlet temperature of 150°C and an outlet temperature of 90°C to give 205 g of hot water extract powder.

1 L of 65 weight % aqueous ethanol solution was added to 100 g of the hot water extract powder, and the mixture was sti rred at 40°C for 72 hours and filtered. The filtrate was concentrated under reduced pressure until its volume became about 200 ml, 43 g of dextrin was added to the resultant concentrate, and the mixture was spray dried at an inlet temperature of 150°C and an outlet temperature of 90°C to give 87 g of coffee extract powder.

### Example 7

A coffee drink of the following composition was produced using the coffee extract powder (extraction treatment time: 24 hours) obtained in Example 1.

| | |
|---|---|
| Coffee extract power | 2.0 g |
| Caramel dye | 0.1 g |
| Balsam pear extract | 0.1 g |

This composition was dissolved in 140 ml of hot water to produce a coffee drink (A).

On the other hand, for comparison, 2.0 g of commercial instant coffee was dissolved in 140 ml of hot water to give a coffee drink (B).

Trial drinking was made on these coffee drinks by a panel consisting of 10 each of adult men and women, and taste, smell, stimulating properties and easiness on drinking were compared. The number of the panel who made "good" judgment on each item was recorded (the number of the panel who answered that there was no difference between both drinks was not counted).

The results are shown in the following Table-1.

**Table-1**

| | Men | | Women | |
|---|---|---|---|---|
| | (A) | (B) | (A) | (B) |
| Taste | 5 | 5 | 7 | 3 |
| Smell | 4 | 6 | 5 | 5 |
| Stimulating properties | 0 | 6 | 0 | 7 |
| Easiness on drinking | 8 | 2 | 9 | 1 |

### Example 8

A coffee drink of the following composition was produced using the coffee extract powder (extraction treatment time: 24 hours) obtained in Example 3.

| | |
|---|---|
| Coffee extract power | 2.00 g |
| Caramel dye | 0.10 g |
| Hop extract | 0.02 g |

This composition was dissolved in 140 ml of hot water to produce a coffee drink (C).

On the other hand, for comparison, 2.0 g of commercial instant coffee was dissolved in 140 ml of hot water to give a coffee drink (D).

A panel test was conducted in the same manner as in Example 7 using these coffee drinks. The results are shown in the following Table-2.

**Table-2**

| | Men | | Women | |
|---|---|---|---|---|
| | (A) | (B) | (A) | (B) |
| Taste | 6 | 4 | 7 | 3 |
| Smell | 4 | 6 | 6 | 4 |
| Stimulating properties | 0 | 5 | 1 | 5 |
| Easiness on drinking | 7 | 3 | 8 | 2 |

## Claims

1. A process for producing a coffee extract which comprises adding 2 to 20 weight parts of an aqueous alcohol solution having a concentration of 10 to 95 weight % to 1 weight part of roasted coffee beans or ground roasted coffee beans, or powder of extract thereof with hot water, subjecting the mixture to extraction treatment at temperatures of 95°C or less, and drying the extract.

2. The process according to claim 1 wherein the aqueous alcohol solution is an aqueous methanol solution or an aqueous ethanol solution.

3. The process according to claim 1 wherein the alcohol concentration in the aqueous alcohol solution is 30 to 90 weight %.

4. The process according to claim 1 wherein 5 to 15 weight parts of the aqueous alcohol solution is added.

5. The process according to claim 1 wherein the extraction treatment is made at temperatures of 0 to 70°C.

6. The process according to claim 1 wherein the drying is conducted after addition to extract of edible or drinkable excipients or extenders, nutrients, bitters and/or spices.

7. The process according to claim 1 wherein spray drying or freeze drying is conducted after concentration of the extract.

8. A coffee drink containing the coffee extract obtained by the process according to claim 1.
